# EUROPÄISCHE PATENTSCHRIFT

(11) **EP 1 002 221 B1**
(45) Veröffentlichungstag und Bekanntmachung des Hinweises auf die Patenterteilung: **02.07.2003**
(21) Anmeldenummer: 97938882.4
(22) Anmeldetag: 06.08.1997
(51) Int. Cl.: G01J 4/04, G01N 21/21

(54) **MIKROPOLARIMETER**
MICROPOLARIMETER
MICROPOLARIMETRE

(43) Veröffentlichungstag der Anmeldung: 24.05.2000
(73) Patentinhaber: INSTITUT FÜR MIKROTECHNIK MAINZ GmbH, 55129 Mainz-Hechtsheim (DE)
(72) Erfinder: ABRAHAM, Michael, D-55129 Mainz (DE); EBERHARDT, Matthias, D-55296 Lörzweiler (DE)
(74) Vertreter: Fuchs Mehler Weiss & Fritzsche
(86) Internationale Anmeldenummer: EP9704291
(87) Internationale Veröffentlichungsnummer: WO99008081

(56) Entgegenhaltungen:
- EP-A- 0 352 133
- EP-A- 0 632 256
- DE-A- 4 442 400
- DE-C- 19 547 553
- US-A- 4 286 843

## Beschreibung

Die Erfindung betrifft ein Mikropolarimeter mit einem Analysator aus einem Polarisationsmaterial, bei dem die Polarisation auf Absorptionseffekten innerhalb des Materials beruht und mit einem in Strahlungsrichtung hinter dem Analysator angeordneten Detektor, der eine Anzahl N_{D} ≥ 3 von Segmenten aufweist, wobei die Fläche des Analysators größer gleich der der Segmentflächen des Detektors ist.

Licht wird in der Technik als berührungslos und zerstörungsfrei arbeitende Sonde zur Messung einer Vielzahl von Probeneigenschaften benutzt. Dabei wird die Änderung von charakteristischen Eigenschaften der Strahlung nach der Wechselwirkung mit der Probe ausgenutzt, wie z.B. der Reflexion oder Transmission. In der Polarimetrie und Ellipsometrie macht man sich dagegen die in den Polarisationseigenschaften enthaltenen Informationen bzw. deren Änderungen infolge der Probenwechselwirkung zunutze.

Bei vollständig polarisiertem Licht sind dieses die Elliptizität, die Lage der Hauptachse der Polarisationsellipse im Raum (Azimuth) und der Drehsinn des Feldstärkevektors. Für partiell polarisiertes Licht kommt noch der Polarisationsgrad hinzu. Diese Größen werden vollständig durch die vier Elemente des Stokesvektors, die sogenannten Stokesparameter erfaßt (siehe R. M. Azzam, Bashara, Ellipsometry and Polarized Light, North Holand, Amsterdam, 1988). Geräte zur Messung der Parameter von polarisiertem Licht nennt man Polarimeter. Eine Vielzahl von Meßaufgaben kann mit Hilfe von vollständig polarisiertem Licht erledigt werden, wobei der Drehsinn des Feldstärkevektors nicht bekannt sein muß. Es genügt dann die Bestimmung von Elliptizität und Azimuth.

Zur Bestimmung von Komponenten des Stokesvektors werden häufig Anordnungen mit mechanisch bewegten Analysatoren bzw. Phasenschiebern (Retarder) benutzt. Systeme mit bewegten Teilen haben immer den Nachteil, daß sie langsam arbeiten, störanfällig, teuer und relativ groß sind. Dieses ist insbesondere für Anwendungen in der Prozeßkontrolle ungünstig: Hohe Meßgenauigkeit, Zuverlässigkeit. Kosteneffizienz und Flexibilität beim Einbau in Fertigungslinien spielen eine immer größere Rolle.

Daher wurde in EP 0 632 256 A1 und US 5,502,567 ein sehr kleines, sehr schnell arbeitendes Polarimeter ohne bewegte Teile vorgeschlagen. Es beruht auf einem polarisierenden Schichtsystem, welches auf der Mantelfläche eines Glaskegels abgeschieden wird. Der beschichtete Kegel wird dann entlang der optischen Achse des Systems über einem kreisförmigen Detektorarray angeordnet, so daß eine eindeutige Zuordnung der Winkelsektoren des polarisierenden Kegels und den Detektorelementen entsteht. Diese Anordnung ist sehr klein, vermeidet jegliche Bewegung und kann infolge ihrer parallelen Arbeitsweise sehr schnell ausgelesen werden.

Ein Nachteil ist jedoch die strenge Monochromasie dieses Kegelpolarimeters, weil das polarisierende Schichtsystem ein Schmalbandfilter ist, der nur in einem sehr engen Spektralbereich die gewünschte Selektivität für eine Polarisation besitzt. Spektrale Anwendungen oder der Wechsel auf andere als die Designwellenlänge sind somit ausgeschlossen.

Nachteilig ist auch die technologisch aufwendige Herstellung des polarisierenden Schichtsystems. So hat die Beschichtung unter einem sehr steilen Winkel zu erfolgen. Außerdem ist eine hohe Homogenität der Schichtparameter auf der Mantelfläche gefordert. Diese Anforderungen können nicht mit gängigen Beschichtungsanlagen, die für senkrechte Beschichtungsgeometrien aufgelegt sind, erfüllt werden.

Ein weiterer Nachteil ist, daß mit dieser Anordnung nur zwei Polarisationsparameter (Elliptizität und Azimuth) gemessen werden können. Die Ermittlung des kompletten Satzes der Stokesparameter erfordert weitere Messungen unter Einbeziehung von Retardern, wie beispielsweise in P. S. Hauge "Recent Developments in Instrumentation in Ellipsometry", Surface Science, 96 (1989) 108-140 diskutiert wird.

Weiterhin wurde in der EP 0 632 256 A1 bzw. US 5,502,567 eine Variante für Miniaturpolarimeter auf der Basis einer zirkularen Anordnung von metallischen Gittern vorgeschlagen. Praktisch wurden nur Polarisationsgrade von 3 erreicht. Diese geringen Werte genügen nicht für Anwendungen in der quantitativen Polarimetrie, wo man für die Erzielung von hohen Meßgenauigkeiten gewöhnlich Bauelemente mit Polarisationsgraden > 10 000 einsetzt.

Die Ursache für den relativ geringen Polarisationsgrad bei Gitterpolarisatoren ist die selektive Reflexion der parallel zu den Gitterlinien schwingenden Komponenten des elektrischen Feldes. Da es sich damit um einen Oberflächeneffekt handelt. kann pro Flächeneinheit nur ein endlicher Polarisationsgrad erreicht werden. So wurden bei einer Wellenlänge von 670 nm für ein Gitter mit einer Gitterkonstanten von 100 nm ein theoretisch erreichbarer Polarisationsgrad von ca. 100 ermittelt. Ein solches elektronenlithografisch hergestelltes Gitter liefert praktisch sogar nur Werte von 2 bis 3 (siehe B. Stenkamp et al. "Grid Polarizer for the Visible Spectral Region". SPIE Proceedings Vol 2213).

Der theoretisch mögliche Polarisationsgrad von Gitterpolarisatoren hängt weitgehend vom Verhältnis der Gitterkonstanten zur Wellenlänge ab. Für eine optimale Wirkung sollte die Wellenlänge größer als die Gitterkonstante sein. Im sichtbaren Spektralbereich bedeutet dies Gitterkonstanten unter 100 nm, was schwierig herstellbar ist. So ist für die Realisierung dieser Anordnung der Einsatz der Elektronenstrahllithografie in Verbindung mit aufwendigendünnschichttechnologischen Prozessen erforderlich. Beides ist mit sehr hohen Kosten verbunden. Daher wurden solche Gitterpolarisatoren bisher hauptsächlich für Anwendungen im Infraroten hergestellt, wo bei Wellenlängen von einigen 10µm bis 100µm die konventionelle Photolithografie mit einer Auflösung von ca. 1µm eingesetzt werden kann.

Weiterhin wurde in der EP 0 632 256 A1 bzw. der US 5,502,567 eine Variante auf der Basis von polarisierenden Wellenleitern vorgeschlagen, die senkrecht auf den Detektorflächen münden. Diese Variante liefert zwar theoretisch einen sehr hohen Polarisationsgrad, nachteilig ist jedoch die zu erwartende außerordentlich geringe Transmission dieser Anordnung infolge des geringen Flächenfüllgrades und der mit der Einkopplung der Welle in die Wellenleiter verbundenen hohen Einkoppelverluste.

Aus der US 4,158,506 ist eine Anordnung mit 6 rechteckigen nebeneinander angeordneten Analysatorelementen mit vorgegebener Polarisationsrichtung bekannt, wovon 2 Elemente doppelt vorkommen und zusätzlich ein λ/4-Plättchen aufweisen. Auf welchem Prinzip die Analysatorelemente beruhen, ob es sich z.B. um Gitter oder dergleichen handelt, wird nicht mitgeteilt.

Die Asymmetrie der Anordnung hat jedoch gravierende Nachteile in der praktischen Anwendung. Für die Anwendungen in der Ellipsometrie werden gut kollimierte Strahlen verwendet. Die Intensitätsverteilung ist jedoch stets inhomogen. Sie klingt gewöhnlich nach außen ab und verläuft häufig gaußförmig. Trifft ein solcher Strahl auf die in der US 4,158,506 vorgeschlagene asymmetrische Anordnung aus 6 Segmenten auf, so kommt es in den Detektoren zu einer Signalverteilung, die nicht nur vom Polarisationszustand. sondern auch von der Position der Achse des Strahls auf der Eintrittsfläche abhängt. Dies bedeutet, daß diejenigen Detektorelemente, die in der Nähe der Strahlachse liegen, mehr Intensität empfangen als andere, weiter entfernte Detektorelemente. Dafür führen die in der US 4,158,506 vorgeschlagenen Auswertemethoden zu großen systematischen Fehlern. Die einzige praktikable Möglichkeit besteht darin, den Strahl mit Hilfe einer zusätzlichen Optik soweit aufzuweiten, daß nur ein sehr kleiner und damit weitgehend homogener Ausschnitt der Kuppe der Strahlachse auf die Anordnung abgebildet wird. Dies ist jedoch mit einem zusätzlichen Aufwand und einem erheblichen Intensitätsverlust verbunden, der nur bei starken Impulslasern gerechtfertigt ist, so daß Anwendungen dieser Anordnung bisher nicht bekannt wurden.

Aus der DE 44 42 400 A1 ist ein Sensor zur Lagebestimmung im Raum bekannt, der einen einen Leitstrahl brechenden Kegel und ein zylindrisches Übergangselement aufweist, das auf einem Detektorarray angeordnet ist. Der Kegel kann mit einem Interferenz-Schichtsystem versehen sein, um den Leitstrahl von parasitärer Strahlung zu trennen. Die Polarisation des Leitstrahles kann mit dieser Anordnung nicht gemessen werden.

Aufgabe der Erfindung ist es, ein Mikropolarimeter ohne bewegte Teile zu schaffen, das bei verbesserter Justierung einen hohen Polarisationsgrad aufweist, für polychromatisches Licht einsetzbar ist, das so klein ist, daß der Strahl von gängigen Lasern ohne zusätzliche Aufweitung in einem Meßschritt erfaßt werden kann, und das auf einfache Weise zu einem kompletten Stokesmeter ausgebaut werden kann.

Diese Aufgabe wird mit einem Mikropolarimeter gelöst, bei dem der Analysator eine einzige kreisförmige Anordnung von Segmenten aufweist und eine kreissymmetrische flache Scheibe bildet, wobei mindestens drei Segmente unterschiedliche Polarisation aufweisen, die Analysatorscheibe N_{A} Segmente aufweist mit N_{A} = N_{D}, und in Strahlungsrichtung vor dem Analysator in Strahlkonverter angeordnet ist, um die sensitive Analysatorfläche ringförmig auszuleuchten.

Derartige Polarisationsmaterialien sind an sich zwar bekannt (s. Thomas P. Seward III "Glass Polarizers Containing Silver", SPIE Proceedings Vol. 464, 1984).

Der Einsatz solcher Polarisationsmaterialien für Segmente eines Analysators in einem Mikropolarimeter. das keine bewegten Teile aufweist, war jedoch bislang noch nicht in Erwägung gezogen worden. Hinzu kommt, daß die mechanische Bearbeitung solcher Polarisationsmaterialien, insbesondere die erfindungsgemäß erforderliche Herstellung von präzisen Zuschnitten einen hohen Arbeitsaufwand bedeutet.

Zur Herstellung von Segmenten für ein Mikropolarimeter werden vorzugsweise mikrotechnische Verfahren angewendet, um die optische Qualität des verwendeten Analysators zu erhalten. Bei den verwendeten Dimensionen spielt die Qualität der Schnittkanten im Vergleich zu makroskopischen Zuschnitten eine große Rolle. Eine schlechte Qualität der Kanten würde Streuung und damit Depolarisation, d.h. eine Erniedrigung des Polarisationsgrades, verursachen. Daher sollten die Schnittkanten nur Unregelmäßigkeiten kleiner als 10 µm aufweisen.

Dem stehen jedoch eine Reihe von Vorteilen gegenüber, die das Mikropolarimeter zu einem hochpräzisen, universell einsetzbaren Gerät machen. Hierzu zählen insbesondere die Unabhängigkeit von der eingestrahlten Wellenlänge und der hohe Polarisationsgrad, der diesen Materialien eigen ist. Bei diesen Polarisationsmaterialien sind die nanometergroßen Teilchen makroskopisch entlang der gewünschten optischen Achse ausgerichtet und in der organischen oder anorganischen Matrix fixiert. Vorzugsweise handelt es sich um ein Polarisationsmaterial, das nanometergroße Teilchen mit starker Anisotropie der optischen Leitfähigkeit enthält. Vorteilhafterweise ist das Polarisationsmaterial Glas mit eingelagerten Silberteilchen.

Die Analysatorscheibe kann gemäß einer Ausführungsform einstückig sein, wobei die Polarisationsrichtung radial oder tangential ausgerichtet ist. Die Segmente können Sektoren oder aber auch flächige Gebilde anderer Gestalt sein, wie z.B. rechteckige oder ovale Segmente, wobei die Segmente auch beabstandet zueinander angeordnet sein können.

Vorzugsweise ist jedes Segment des Analysators aus einem dreieckförmigen oder trapezförmigen Zuschnitt eines Polarisationsmaterials gebildet, bei dem die Polarisation auf Absorptionseffekten innerhalb des Materials beruht.

Die Segmente der Analysatorscheibe müssen nicht zwingend eine radiale oder tangentiale Polarisationsrichtung aufweisen. Die Polarisationsrichtung jedes Segmentes kann mit der jeweiligen Winkelhalbierenden des Segements einen Winkel α bilden, für den 0° ≤ α ≤ 180° gilt.
Vorzugsweise weisen jeweils gegenüberliegende Segmente dieselbe Polarisationsrichtung auf.

Um einen möglichst hohen Polarisationsgrad zu erreichen, liegt die Dicke des Polarisationsmaterials im Bereich von 50 µm bis 2 mm.

Im Gegensatz zu den bekannten Gitterpolarisatoren beruht in solchen Polarisatoren die Auslöschung der einen Feldkomponente der Lichtwelle nicht auf einer Oberflächenreflexion, sondern auf einer selektiven Absorption in den Nanopartikeln. Die Verteilung im Volumen der Matrix ermöglicht auch deutlich höhere Polarisationswerte, weil die absorbierte Energie von der Anzahl der Absorptionszentren bzw. von der durchlaufenden Materialdicke abhängt.

Das Mikropolarimeter ist so ausgelegt, daß eingangsseitig grundsätzlich eine kreissymmetrische Anordnung benutzt wird, die der bei Lasern oder kollimierten Weißlichtquellen vorliegenden Strahlgeometrie und Intensitätsverteilung entspricht. Daher sind die N_{A} Segmente des Analysators kreisförmig angeordnet.

Die Messung der Polarisation liefert dann sinnvolle Ergebnisse, wenn die Strahlachse mit der Symmetrieachse des Polarimeters übereinstimmt. Dies wird dadurch erreicht, daß eine gerade Anzahl N_{A,D} von gleichen Segmenten vorgesehen ist. Gegenüberliegende Segmente werden damit bei korrekter Justierung der Strahlachse auf die Symmetrieachse gleiche Signale erzeugen und zwar unabhängig von der Polarisation. Damit ist im Gegensatz zur US 4,158,506 eine Separation der geometrischen von der Polarisationsinformation auch im Fall von Gaußstrahlen möglich. Die erfindungsgemäße Anordnung ist also nicht nur ein Polarimeter, sondern auch gleichzeitig ein Sensor zur Feststellung der korrekten Justierung des Gerätes im Strahlengang. Der Analysator enthält mindestens drei Segmente unterschiedlicher Polarisation, um zwei Polarisationseigenschaften - Elliptizität und Azimuth - sowie die Intensität ermitteln zu können. Bei zusätzlicher Verwendung von Retardern (λ/4- oder λ/2-Plättchen) in einigen Elementen können auch weitere Stokesparameter bestimmt werden, wie der Drehsinn des Feldstärkevektors und der Polarisationsgrad. Wenn mehr Elemente benutzt werden, als zur Bestimmung der Polarisation erforderlich sind, so kann damit das Signal/Rauschverhältnis der Messung verbessert werden.

Nach Durchlaufen der Elemente des Analysators müssen die N Informationen den N_{D} Segmenten des Detektorarrays eindeutig und ohne Übersprechen zugeführt werden. Gemäß einer ersten Ausführungsform sind die Zuschnitte auf den Segmenten des Detektors mittels eines transparenten Klebers befestigt.

Wenn die Größe oder Form der Segmente von Analysator und Detektor unterschiedlich sind, ist ein Strahlkonverter vorzusehen.

Ein Strahlkonverter vermittelt die Anpassung des Strahlquerschnittes zwischen Analysator- und Detektorarray, so daß eine für die Detektion optimale und von Übersprechen freie, eindeutige Zuordnung erfolgt.

Gemäß einer besonderen Ausführungsform sind die Segmente des Detektors rechteckig, wobei die Segmente linear oder in Zeilen und Spalten nebeneinander angeordnet sind. Zwischen den N_{A} Segmenten des Analysators und den N_{D} Segmenten des Detektors können Lichtleiter angeordnet sein. Vorzugsweise ist pro Segment ein verpreßtes, an die Form von Analysatorsektor und Detekiorsegment angepaßtes Lichtleiterbündel als Strahlenkonverter angeordnet.

Es ist auch möglich, zwischen dem Analysator und dem Detektor eine Gradientenindexlinse vorzusehen.

Ein gewöhnliches PSA-Ellipsometer (Polarizer-Sample-Analyzer) ist aufgrund der Tatsache, daß man nicht die elektrischen Felder, sondern deren Intensitäten detektiert, nicht in der Lage. zwischen links- und rechtszirkular polarisierten Zuständen zu unterscheiden. Diese Doppeldeutigkeit der Ergebnisse kann durch Einbringen weiterer optischer Komponenten in den Strahlengang beseitigt werden. Häufig wird dazu ein λ/2-Plättchen benutzt, das zwischen dem Eingangspolarisator und der Probe so angebracht wird, daß rechts- oder linkszirkular polarisiertes Licht entsteht. Durch den Vergleich zweier Messungen - einmal mit linear (45° zum p-s Koordinatensystem) und einmal mit zirkular polarisiertem Licht - kann man nun zwischen links- und rechtszirkular unterscheiden.

Dieses Verfahren ist für das erfindungsgemäße Mikropolarimeter nicht brauchbar. da es sowohl die Meßzeit als auch die Meßgenauigkeit beeinträchtigt. Um zudem weiterhin redundante Segmente auf dem Detektor zu haben, die eine Positionsdetektion ermöglichen, wird zusätzlich zum Analysator ein weiteres Array vorgeschaltet, das im einfachsten Fall zwei Plättchen aus einem doppelbrechenden Material mit bekannter Phasenverschiebung δ aufweist. Vorzugsweise werden λ/4-Plättchen mit einer der Hauptachsen unter 45° zum p-s Koordinatensystem verwendet. Die nicht mit doppelbrechendem Material belegten Analysatorsegmente liefern dann weiterhin redundante Polarisationsinformation und somit im Falle der Dejustage ein Positionssignal, während die mit doppelbrechenden Plättchen belegten Paare im justierten Zustand die Information über die Händigkeit des Polarisationszustandes liefern. Die Summe aller Signale aus den einzelnen Segmenten kann zudem als Intensitätssignal, das auch im Falle von teilpolarisiertem Licht zur Gesamtintensität proportional ist, interpretiert werden und daraus kann der komplette Stokes-Vektor in einem einzigen Meßschritt ermittelt werden.

Bei kreisförmigem Analysator und Detektor kann ein Problem bei einer gaußförmigen Intensitätsverteilung des Strahls auftreten, weil die Intensität des Gaußstrahls in das Zentrum des Analysator- bzw. Detektorarrays fällt, wo die segmentförmigen Elemente gerade sehr unempfindlich werden bzw. der Detektor einen blinden zentralen Bereich aufweist. Dagegen wird der Randbereich, der die optimale Analysator- und Detektorfläche darstellt, nur von den Ausläufern des Gaußbündels beleuchtet. Durch Vorschalten eines geeigneten Strahlkonverters vor den Analysator kann die Intensitätsverteilung auf der Analysator- und der Detektorfläche vorteilhaft beeinflußt werden.

Die Verwendung eines vorgeschalteten Strahlkonverters verbessert auch die Justierung, weil ansonsten eine Fehljustierung bezüglich der Winkel nicht von einer bloßen lateralen Verschiebung zu trennen ist. Ein solcher vorgeschalteter Strahlkonverter soll somit im wesentlichen zwei Funktionen erfüllen:
- Umverteilung der Intensität des Strahls im Hinblick auf eine gute Ausleuchtung des Analysators und des Detektors,
- Ausbildung eines empfindlichen Justiersignals für die Ausrichtung der Strahlachse auf die Symmetrieachse des Sensors.

Dies wird immer dann erreicht, wenn der Strahlkonverter eine "Blenden-Detektor"-Anordnung darstellt. Verkippt man die Strahlachse, so wandert das Bild auf dem Analysator, was durch Vergleich der Intensitäten auf den gegenüberliegenden Analysator- bzw. Detektorflächen leicht nachgewiesen werden kann.

Als vorgeschaltete Strahlkonverter können vorzugsweise konvexe, plankonvexe, konkave, plankonkave Linsen, transparente Kegel, Linsenarrays, Fresnellinsen oder Gradientenindexlinsen eingesetzt werden.

Vorzugsweise ist der Durchmesser des Strahlkonverters größer gleich dem Durchmesser des Analyators.

Die Detektorsegmente können auf einem Signalkonditionierungschip angeordnet oder in einem solchen Chip integriert sein.

In der Detektorebene liegen - nachdem das Licht die N_{A} Segmente des Analysators durchlaufen hat - n Polarisationsinformationen vor, die alle parallel, d.h. gleichzeitig ausgelesen werden müssen, um die maximale Geschwindigkeit des Mikropolarimeters ausnutzen zu können, wobei die Polarisationsfunktionen frei von Übersprechen zwischen den einzelnen Segmenten sind. Nur das parallele Auslesen aller Segmente zu definierten Zeitpunkten macht die Verfolgung sich schnell ändernder Signale möglich. Gelöst wird dieses Problem in unserer Anordnung durch ein spezielles Diodenarray, das so beschaffen ist, daß ein Photon, welches in der Diode m absorbiert wurde, auch nur in dieser Diode zu einem Strom beitragen kann und nicht - aufgrund von Diffusionsprozessen - in einer der benachbarten Dioden. Da die Ströme. die bei der optoelektronischen Konvertierung entstehen, so gering sind, daß sie in unmittelbarer Nähe zum Detektor sofort vorverstärkt und impedanzgewandelt werden müssen, können die Signale wegen des elektronischen Verhaltens der Detektordioden nicht über Leitungslängen geschickt werden, die größer als ca. 10 cm sind. Diesen Anforderungen werden durch ein Array von n Vorverstärkern Rechnung getragen, die beispielsweise in Chip-on-wire Technologie - hoch kompakt und in nächster Nähe zu den Dioden - mit auf der Leiterplatine integriert sind. Hieraus ergibt sich ein optoelektronischer Detektor, der allen Anforderungen des Polarimeters genügt und der klein genug ist, um die Vorteile des kompakten Aufbaus des Micro-polarimeters nicht zu beeinträchtigen.

Für den Detektor kann auch ein CCD-Chip verwendet werden, der keine vorgegebene Aufteilung in Segmente aufweist. Erst in der späteren Signalverarbeitung kann elektronisch eine Zuordnung der über die Pixel ausgelesenen Informationen zu entsprechenden Segmenten erfolgen.

Beispielhafte Ausführungsformen werden nachfolgend anhand der Zeichnungen näher erläutert.

Es zeigen
- Fig. 1a: eine perspektivische Darstellung eines Analysators und eines Detektors,
- Fig. 1b: einen Vertikalschnitt durch den in der Fig. 1a gezeigten Analysator und Detektor,
- Fig. 1c,d: perspektivische Darstellungen des Detektorchips,
- Fig. 1e: einen Analysator gemäß einer weiteren Ausführungsform,
- Fig. 2: einen Schnitt durch ein Mikropolarimeter mit einer vorgeschalteten plankonkaven Linse,
- Fig. 3: einen Vertikalschnitt durch ein Mikropolarimeter mit einer vorgeschalteten plankonvexen Linse,
- Fig. 4: einen Vertikalschnitt durch ein Mikropolarimeter mit einem vorgeschalteten transparenten Kegel,
- Fig. 5: einen Vertikalschnitt durch ein Mikropolarimeter mit einem vorgeschalteten Linsenarray,
- Fig. 6: einen Vertikalschnitt durch ein Mikropolarimeter mit einer vorgeschalteten Fresnellinse,
- Fig. 7: die perspektivische Darstellung eines Strahlkonverters in Form eines Lichtwellenleiterbündels zwischen Analysator und Detektor, und
- Fig. 8: ein Stokes-Meter.

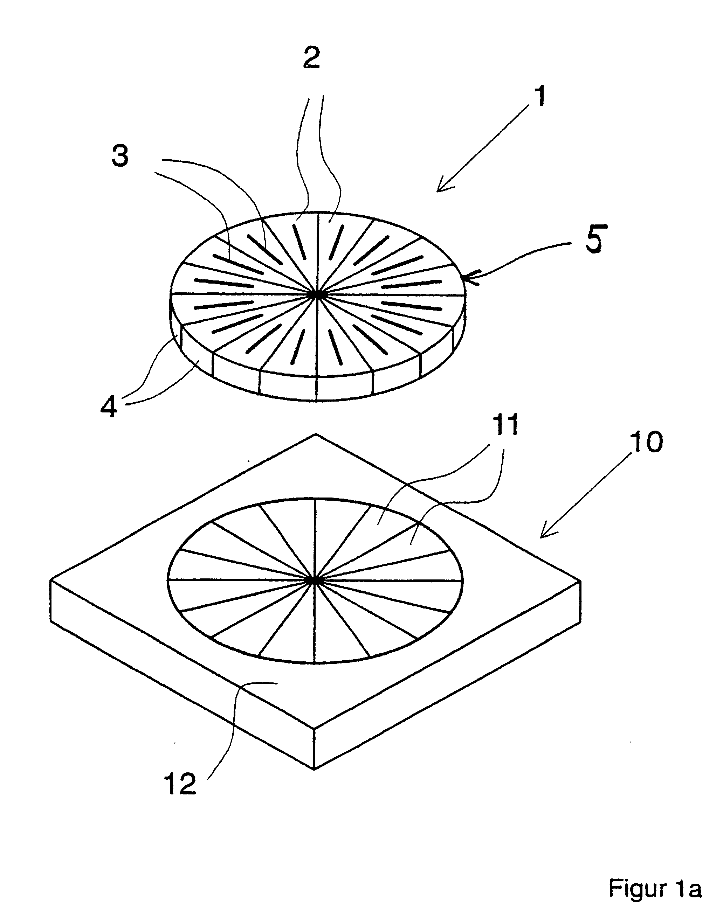

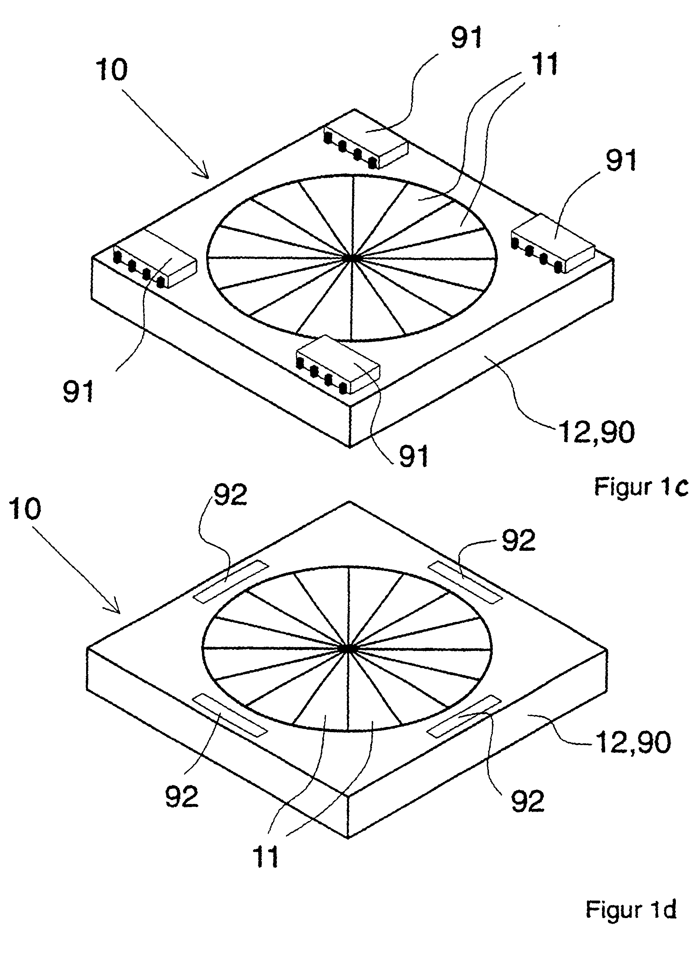

In der Fig. 1a ist ein Analysator 1 mit einer kreisförmigen Anordnung von Segmenten 2 dargestellt, die zusammen eine Scheibe 5 bilden. Jedes Segment besteht aus einem Zuschnitt 4 eines Polarisationsmaterials, dessen Polarisationswirkung auf Absorptionseffekten innerhalb des Polarisationsmaterials beruht. Die Polarisationsrichtung liegt radial und ist durch das Bezugszeichen 3 gekennzeichnet. Unterhalb des Analysators 1 befindet sich ein Detektor 10. der dieselbe Anzahl von Segmenten 11 aufweist, die in einem Detektorchip 12 angeordnet sind. Die Anordnung dieser Segmente ist ebenfalls kreisförmig. Die Segmente 11 sind identisch und unabhängig voneinander auslesbar. Bei korrekter Justierung liefert jeder der gegenüberliegenden Detektorsegmente 11 identische Signale. In der Fig. 1a ist der Analysator 1 noch nicht mit dem Detektor 10 verbunden.

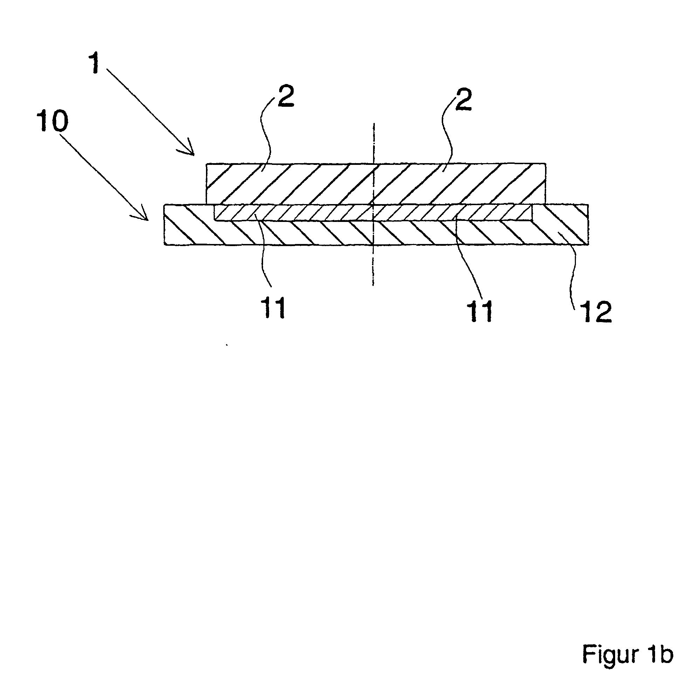

In der Fig. 1b ist der Analysator 1 über eine transparente Klebschicht mit dem Detektor 10 verbunden.

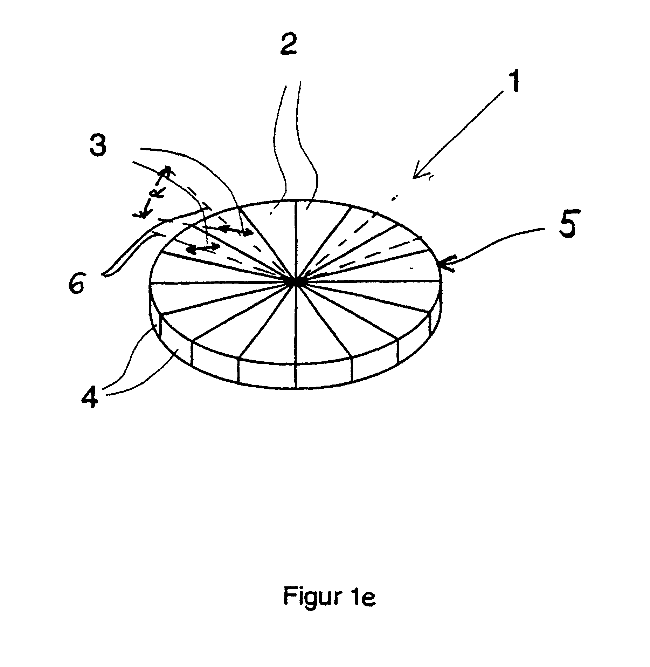

In der Fig. 1 c ist der Detektorchip 12 als hybrider Signalkonditionierungschip 90 mit aufgesetzten IC-Verstärkerbausteinen 91 und in der Fig. 1d als monolithischer Chip mit integrierter Verstärkerschaltung 92 dargestellt.

In der Fig. 1e ist eine aus Zuschnitten 4 zusammengesetzte Scheibe 5 dargestellt, bei der die Polarisationsrichtung 3 mit der jeweiligen Winkelhalbierenden 6 der Segmente 2 einen Winkel α bildet.

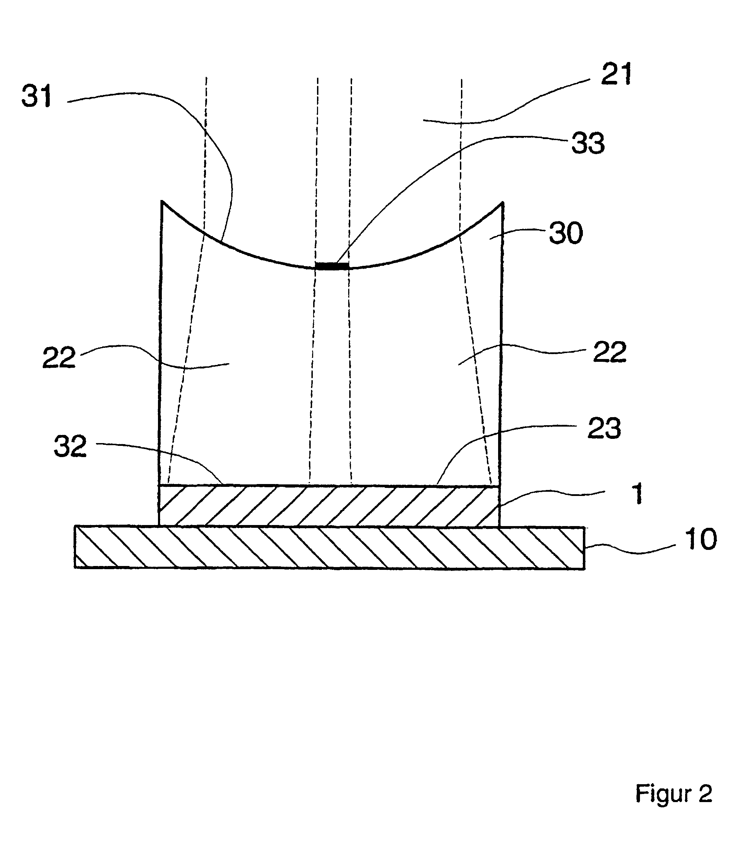

In der Fig. 2 ist ein Schnitt durch ein solches Mikropolarimeter, bestehend aus Analysator 1 und Detektor 10 ebenfalls im Schnitt dargestellt, wobei ein Strahlkonverter 30 in Form einer plankonkaven Linse 30 vorgeschaltet ist. Die konkave Fläche 31 ist dem zu analysierenden Strahl 21 zugewandt, während die plane Fläche 32 auf der Oberseite des Analysators 1 aufliegt. Aufgrund der konkaven Krümmung des Strahlkonverters 30 und der im Zentrum angeordneten Blende 33 wird der Strahl 22 nach außen gebrochen, und somit von dem unempfindlichen zentralen Bereich von Analysator und Detektor ferngehalten. Wenn es sich bei dem Eingangsstrahl 21 um einen Strahl mit kreisförmigem Querschnitt handelt, erhält man auf dem Analysator eine ringförmig ausgeleuchtete Fläche 23 mit einem dunklen Bereich im Zentrum.

Wenn eine Fehljustierung vorliegt, d.h. wenn die Achse des Strahls 21 nicht parallel zur Normalen der Detektorfläche ist, erhält man eine deformierte, ausgeleuchtete Fläche 23. die über die gemessene Intensität der Detektorsegmente nachgewiesen wird. Anhand der Intensitätswerte kann eine präzise Justierung vorgenommen werden.

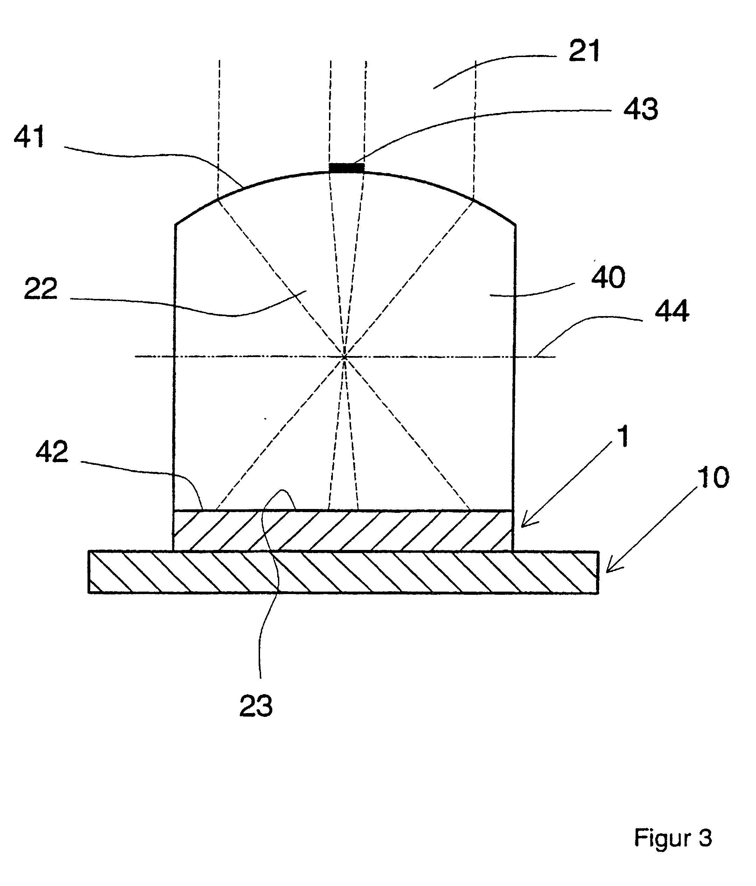

In der Fig. 3 ist eine entsprechende Anordnung mit einer plankonvexen Linse 40 dargestellt. Die plane Fläche 42 liegt auf dem Analysator auf, während die konvexe Fläche 41 dem zu analysierenden Strahl 21 zugewandt ist. Auch hier ist in der Mitte eine Blende 43 angeordnet. Die Krümmung und die Dicke der Linse 40 ist so gewählt, daß etwa in der Mitte zwischen konvexer Fläche 41 und planer Fläche 42 die Brennebene 44 verläuft. Dadurch wird erreicht, daß die eintretenden Strahlen so stark gebrochen werden, daß sie auf die jeweils gegenüberliegende Seite des Analysators gelenkt werden. Auch bei dieser Anordnung erhält man eine kreisförmig ausgeleuchtete Fläche 23 auf der Oberfläche des Analysators, wobei das Zentrum des Analysators und damit das Zentrum des Detektors dunkel bleibt.

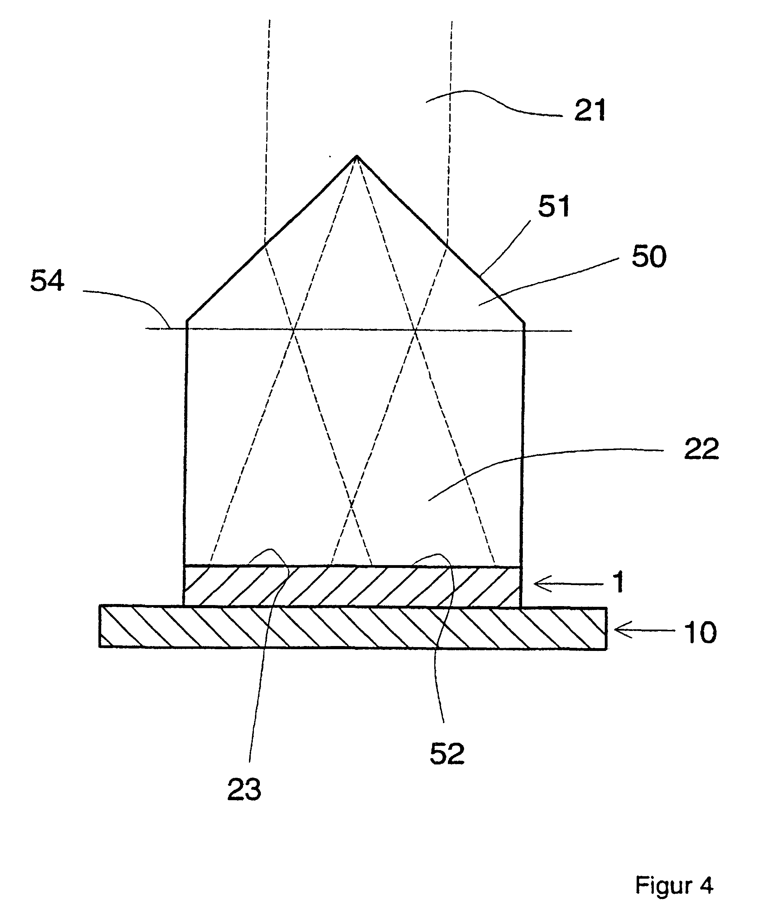

In der Fig. 4 ist eine weitere Ausführungsform mit einem Kegel 50 dargestellt. Die Kegeltläche 51 ist dem zu analysierenden Strahl 21 zugewandt, während die plane Fläche 52 auf der Oberfläche des Analysators aufliegt. Die Ebene 54, in der sich die Strahlen kreuzen, verläuft innerhalb des Kegels 50, so daß die eintretenden Strahlen jeweils auf die gegenüberliegende Seite gebrochen werden. Auch in dieser Ausführungsform erhält man eine ringförmig ausgeleuchtete Fläche 23 auf der Oberseite des Analysators.

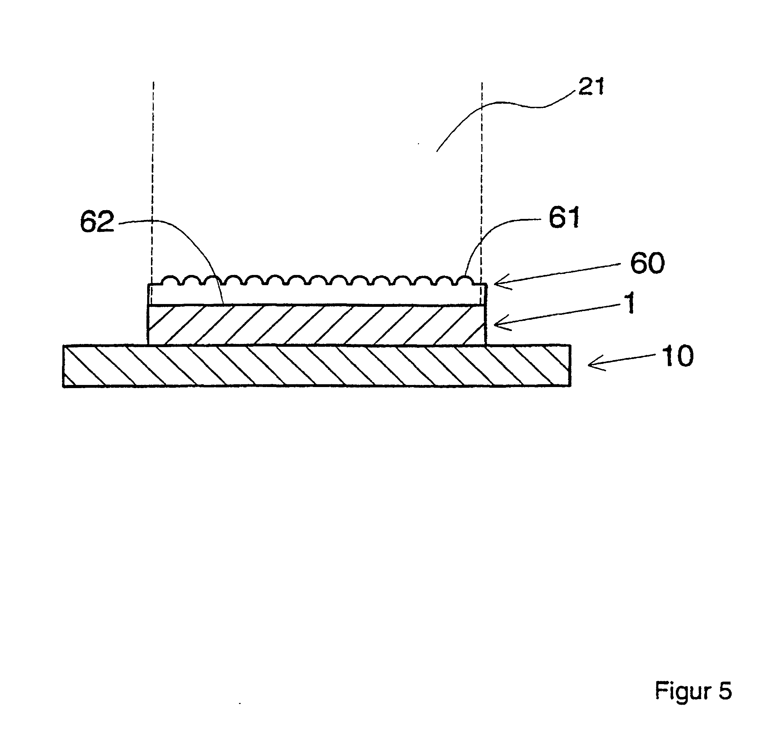

In der Fig. 5 ist eine weitere Ausführungsform mittels eines Linsenarrays 60 dargestellt. Die Linsenanordnung 61 ist dem zu analysierenden Strahl 21 zugewandt, während die plane Fläche 62 auf der Oberseite des Analysators 1 aufliegt.

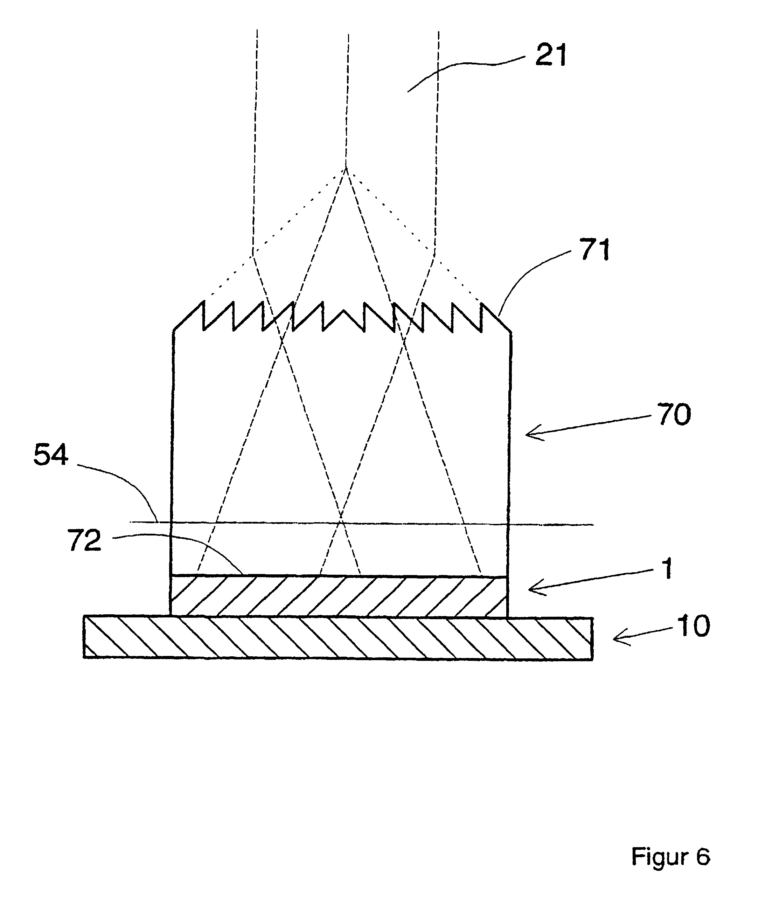

In der Fig. 6 ist eine weitere Ausrührungsform mittels einer Fresnellinse 70 dargestellt. Die Linsenfläche 71 ist dem zu untersuchenden Strahl 21 zugewandt. während die plane Fläche 72 auf der Oberfläche des Analysators 1 aufliegt.

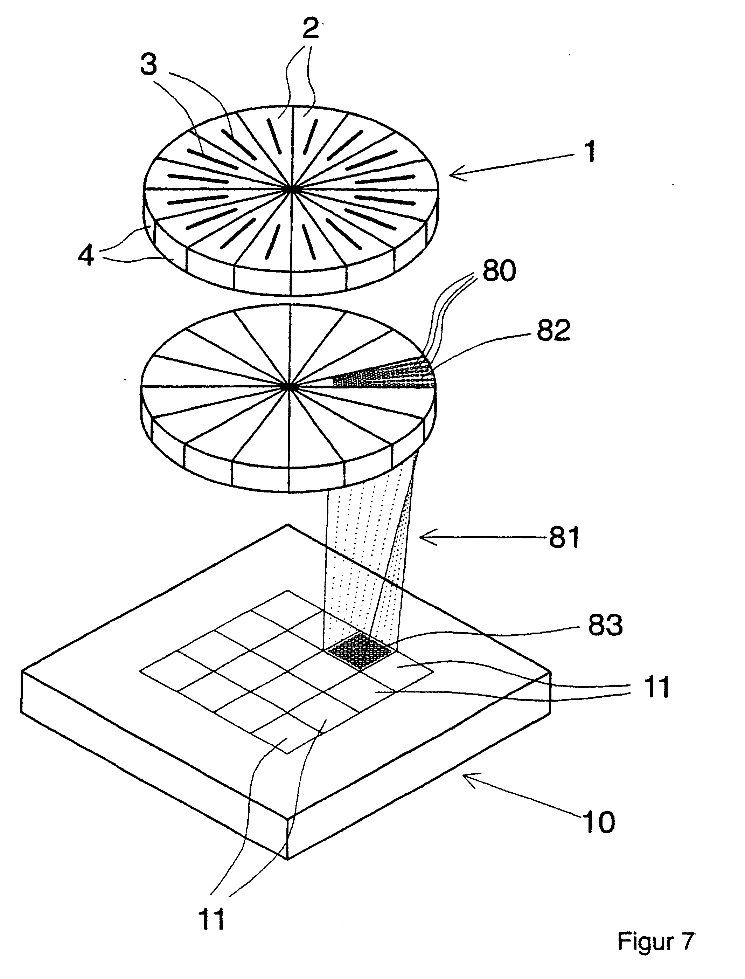

In der Fig. 7 ist eine Ausführungsform mit einem Konverter zwischen dem Analysator 1 und dem Detektor 10 dargestellt. Das Analysatorarray besitzt eine kreisförmige Anordnung von dreieckförmigen Segmenten 2, während das Detektorarray nebeneinander angeordnete rechteckige Segmente 11 aufweist. Um eine Transformation der dreieckförmigen Analysatorsegmente auf die rechteckigen Detektorsegmente 11 herbeizuführen, ist ein Strahlkonverter 81 vorgesehen, das aus einer Vielzahl von Lichtwellenleitern 80 besteht. Die Eintrittsfläche 82 entspricht der Form und Größe eines Segments des Analysalors, während die Austrittsfläche 83 in Gestalt und Ausdehnung einer Segmentfläche 11 des Detektors entspricht. Diese Anordnung hat den Vorteil, daß kommerziell erhältliche Detektorzeilen oder Detektorarrays verwendet werden können.

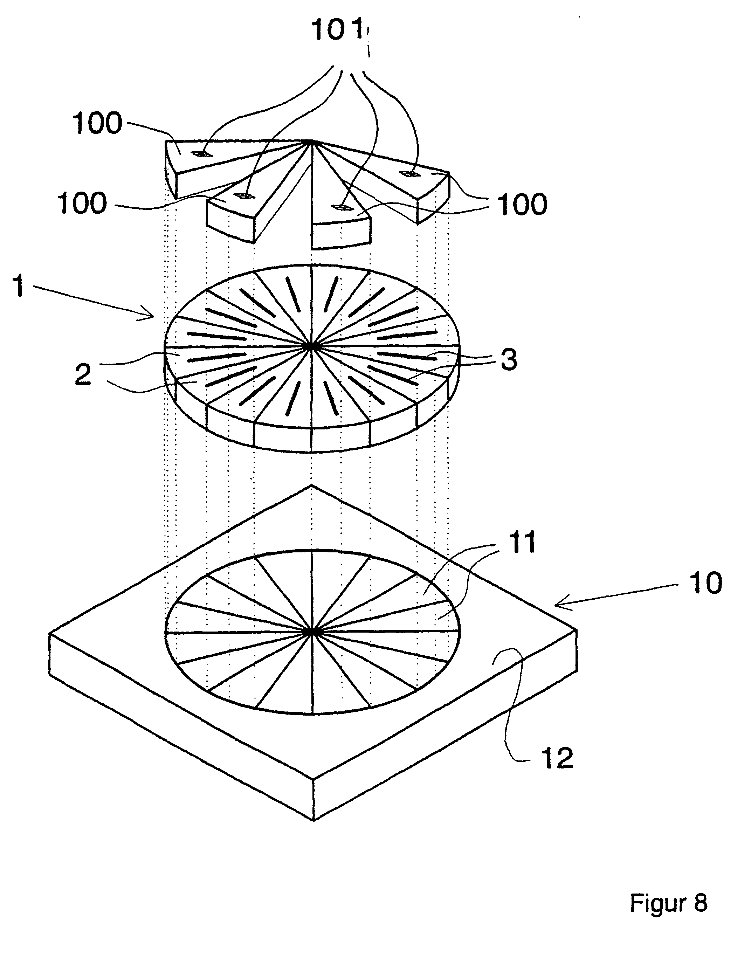

In der Fig. 8 ist ein vollständiges Stokes-Meter dargestellt, das zusätzlich zum Aufbau der Fig. 1a vor dem Analysator 1 vier alternierend angeordnete λ/4-Plättchen 100 aufweist, deren Hauptachsenrichtung 101 für alle λ/4-Plättchen 100 gleich ist.

## Patentansprüche

1. Mikropolarimeter mit einem Analysator aus einem Polarisationsmaterial, bei dem die Polarisation auf Absorptionseffekten innerhalb des Materials beruht und mit einem in Strahlungsrichtung hinter dem Analysator angeordneten Detektor, der eine Anzahl N_{D} ≥ 3 von Segmenten aufweist, wobei die Fläche des Analysators (1) größer gleich der der Segmentflächen des Detektors (10) ist, **dadurch gekennzeichnet,**
**daß** der Analysator (1) eine einzige kreisförmige Anordnung von Segmenten aufweist und eine kreissymmetrische flache Scheibe bildet, wobei mindestens drei Segmente unterschiedliche Polarisation aufweisen,
**daß** die Analysatorscheibe (5) N_{A} Segmente (2) aufweist mit N_{A} = N_{D}, und
**daß** in Strahlungsrichtung vor dem Analysator (1) ein Strahlkonverter angeordnet ist, um die sensitive Analysatorfläche ringförmig auszuleuchten.

2. Mikropolarimeter nach Anspruch 1, daduch gekennzeichnet, daß die Analysatorscheibe (5) einstückig ist und daß die Polarisationsrichtung radial oder tangential ausgerichtet ist.

3. Mikropolarimeter nach Anspruch 1 oder 2, **dadurch gekennzeichnet, daß** jedes Segment (2) aus einem dreieckförmigen oder trapezförmigen Zuschnitt (4) des Polarisationsmaterials gebildet ist.

4. Mikropolarimeter nach einem der Ansprüche 1 bis 3, **dadurch gekennzeichnet, daß** die Polarisationsrichtung jedes Segmentes (2) der Analysatorscheibe (5) mit der jeweiligen Winkelhalbierenden (6) des Segmentes (2) einen Winkel α bildet, für den gilt 0° ≤ α ≤ 180°.

5. Mikropolarimeter nach Anspruch 4, **dadurch gekennzeichnet, daß** jeweils gegenüberliegende Segmente (2) dieselbe Polarisationsrichtung aufweisen.

6. Mikropolarimeter nach einem der Ansprüche 1 bis 5, **dadurch gekennzeichnet, daß** das Polarisationsmaterial nanometergroße Teilchen mit starker Anisotropie der optischen Leitfähigkeit enthält.

7. Mikropolarimeter nach einem der Ansprüche 1 bis 6, **dadurch gekennzeichnet, daß** das Polarisationsmaterial eine Polarisationsfolie oder ein Glas mit eingelagerten Silberteilchen ist.

8. Mikropolarimeter nach einem der Ansprüche 1 bis 7, **dadurch gekennzeichnet, daß** die Dicke des Polarisationsmaterials im Bereich von 50 µm bis 2 mm liegt.

9. Mikropolarimeter nach einem der Ansprüche 1 bis 8, **dadurch gekennzeichnet, daß** der Analysator (1) eine gerade Anzahl N_{A} von Segmenten (2) aufweist.

10. Mikropolarimeter nach einem der Ansprüche 1 bis 9, **dadurch gekennzeichnet, daß** die Zuschnitte (4) auf den Segmenten (11) des Detektors (10) mittels eines transparenten Klebers (20) befestigt sind und daß die Zuschnitte dieselbe Form aufweisen wie die Segmente (11) des Detektors (10).

11. Mikropolarimeter nach einem der Ansprüche 1 bis 10, **dadurch gekennzeichnet,**
**daß** die Segmente (11) des Detektors (10) rechteckig sind,
**daß** die Segmente (11) linear oder in Zeilen und Spalten nebeneinander angeordnet sind, und
**daß** zwischen den N_{A} Segmenten (2) des Analysators (1) und den N_{D} Segmenten (11) des Detektors (10) Lichtleiter (80) angeordnet sind.

12. Mikropolarimeter nach Anspruch 11, **dadurch gekennzeichnet, daß** pro Segment (2,11) ein verpreßtes, an die Form von Analysatorsegment (2) und Detektorsegment (11) angepaßtes Lichtleiterbündel (81) angeordnet ist.

13. Mikropolarimeter nach einem der Ansprüche 1 bis 12, **dadurch gekennzeichnet, daß** vor mindestens zwei Analysatorsegmenten (2) jeweils ein Plättchen aus einem doppelbrechenden Material mit bekannter Phasenverschiebung δ, vorzugsweise ein λ/4-Plättchen (100), angeordnet ist.

14. Mikropolarimeter nach einem der Ansprüche 1 bis 13, **dadurch gekennzeichnet, daß** der Strahlkonverter mindestens eine konvexe Linse (40) umfaßt.

15. Mikropolarimeter nach Anspruch 14, **dadurch gekennzeichnet, daß** die konvexe Linse (40) eine plankonvexe Linse ist, deren plane Fläche (42) dem Analysator (1) zugewandt ist.

16. Mikropolarimeter nach einem der Ansprüche 14 oder 15, **dadurch gekennzeichnet, daß** die plane Fläche (42) in Strahlungsrichtung hinter der Brennebene (44) liegt.

17. Mikropolarimeter nach einem der Ansprüche 1 bis 13, **dadurch gekennzeichnet, daß** der Strahlkonverter mindestens eine konkave Linse (30) umfaßt.

18. Mikropolarimeter nach Anspruch 17, **dadurch gekennzeichnet, daß** die konkave Linse (30) eine plankonave Linse ist, deren plane Fläche (32) dem Analysator (1) zugewandt ist.

19. Mikropolarimeter nach einem der Ansprüche 1 bis 13, **dadurch gekennzeichnet, daß** der Strahlkonverter einen transparenten Kegel (50) umfaßt.

20. Mikropolarimeter nach Anspruch 19, **dadurch gekennzeichnet, daß** die Neigung der Kegelfläche (51) so groß ist, daß die Grundfläche (52) des Kegels in Strahlungsrichtung hinter einer Ebene (54) liegt, in der sich die Lichtstrahlen kreuzen.

21. Mikropolarimeter nach einem der Ansprüche 1 bis 13, **dadurch gekennzeichnet, daß** der Strahlkonverter ein Linsenarray (60), eine Fresnellinse (70) oder eine Gradientenindexlinse (73) umfaßt.

22. Mikropolarimeter nach einem der Ansprüche 1 bis 21, **dadurch gekennzeichnet, daß** der Durchmesser des Strahlkonverters größer/gleich dem Durchmesser des Analysators (1) ist.

23. Mikropolarimeter nach einem der Ansprüche 1 bis 22, **dadurch gekennzeichnet, daß** die Detektorsegmente (11) auf einem Signalkonditionierungschip angeordnet oder in den Signalkonditionierungschip (90) integriert sind.

24. Mikropolarimeter nach einem der Ansprüche 1 bis 23, **dadurch gekennzeichnet, daß** der Detektor (10) ein CCD-Chip ist, dessen Pixel elektronisch zu N_{D} Segmenten zusammengeschaltet sind.

## Claims

1. A micropolarimeter with an analyzer from a polarization material, with which the polarization is based on absorption effects within the material and with a detector arranged in a beam direction behind the analyzer, wherein the detector has N_{D} ≥ 3 segments, whereby the surface of the analyzer (1) is greater relative to segment surfaces of the detector (10),
**characterized in that**
the analyzer (1) has a single, circular arrangement of segments and forms a circularly symmetric disk, whereby at least three segments have different polarizations,
that the analyzer disk (5) has N_{A} segments (2) with N_{A} = N_{D}, and
that in a beam direction, a beam converter is arranged in front of the analyzer (1), in order to illuminate a sensitive analyzer surface.

2. The micropolarimeter according to claim 1, **characterized in that** the analyzer disk (5) is one piece and that the polarization direction is oriented radially or tangentially.

3. The micropolarimeter according to claim 1 or 2, **characterized in that** each segment (2) is formed from a triangular or trapezoidal pre-cut part (4) of the polarization material.

4. The micropolarimeter according to one of claims 1 to 3, **characterized in that** a polarization direction of each segment (2) of the analyzer disk (5) forms an angle with a respective angle bisector (6) of the segment (2), wherein for the angle 0° ≤ α ≤ 180°.

5. The micropolarimeter according to claim 4, **characterized in that** respective opposite segments (2) have the same polarization direction.

6. The micropolarimeter according to one of claims 1 to 5, **characterized in that** the polarization material contains nanometer-sized parts with a greater anisotropy of the optical conductivity.

7. The micropolarimeter according to one of claims 1 to 6, **characterized in that** the polarization material is a polarization film or a glass with embedded silver particles.

8. The micropolarimeter according to one of claims 1 to 7, **characterized in that** a thickness of the polarization material lies in a range of 50 µm to 2 mm.

9. The micropolarimeter according to one of claims 1 to 8, **characterized in that** the analyzer (1) has an even number N_{A} of segments (2).

10. The micropolarimeter according to one of claims 1 to 9, **characterized in that** the pre-cut parts (4) are attached to the segments (11) of the detector (10) by means of a transparent adhesive (20) and that the pre-cut parts have the same shape as the segments (11) of the detector (10).

11. The micropolarimeter according to one of claims 1 to 10,
**characterized in that**
the segments (11) of the detector (10) are rectangular,
that the segments (11) are arranged linear or in lines and columns adjacent one another,
that photoconductors (80) are arranged between the N_{A} segments (2) of the analyzer (1) and the N_{D} segments (11) of the detector (10).

12. The micropolarimeter according to claim 11, **characterized in that**, per segment (2, 11), a compressed photoconductor bundle (81) that is adapted to the shape of the analyzer segment (2) and the detector segment (11) is arranged.

13. The micropolarimeter according to one of claims 1 to 12, **characterized in that** in front of at least two analyzer segments (2), respectively, a die made from birefringent material with a known phase displacement δ, preferably a λ/4 die (100), is arranged.

14. The micropolarimeter according to one of claims 1 to 13, **characterized in that** the beam converter includes at least one convex lens (40).

15. The micropolarimeter according to claim 14, **characterized in that** the convex lens (40) is a planar convex lens, whose planar surface (42) faces toward the analyzer (1).

16. The micropolarimeter according to one of claims 14 or 15, **characterized in that** the planar surface (42) lies behind a focal plane (44) in the beam direction.

17. The micropolarimeter according to one of claims 1 to 13, **characterized in that** the beam converter includes at least one concave lens (30).

18. The micropolarimeter according to claim 17, **characterized in that** the concave lens (30) is a planar concave lens, whose planar surface (32) faces toward the analyzer (1).

19. The micropolarimeter according to one of claims 1 to 13, **characterized in that** the beam converter includes a transparent cone (50).

20. The micropolarimeter according to claim 19, **characterized in that** a gradient of a cone surface (51) is so large that a base surface (52) of the cone lies behind a plane (54) in the beam direction, in which the light beams cross.

21. The micropolarimeter according to one of claims 1 to 13, **characterized in that** the beam converter includes a lens array (60), a Fresnel lens (70), or a gradient index lens (73).

22. The micropolarimeter according to one of claims 1 to 21, **characterized in that** a diameter of the beam converter is greater relative to a diameter of the analyzer (1).

23. The micropolarimeter according to one of claims 1 to 22, **characterized in that** the detector segments (11) are arranged on a signal conditioning chip or is integrated into a signal conditioning chip (90).

24. The micropolarimeter according to one of claims 1 to 23, **characterized in that** the detector (10) is a CCD chip, whose pixels are interconnected electronically to N_{D} segments.

## Revendications

1. Micropolarimètre comportant un analyseur, en matière polarisante, dans lequel la polarisation repose sur des effets d'absorption à l'intérieur de la matière, et un détecteur, disposé en aval de l'analyseur dans le sens du rayonnement, qui présente un nombre N_{D} ≥ 3 de segments, la surface de l'analyseur (1) étant supérieure ou égale à celle des surfaces de segment du détecteur (10),
**caractérisé en ce que**
l'analyseur (1) présente un agencement circulaire unique de segments et constitue un disque plat à symétrie circulaire, au moins trois segments présentant une polarisation différente,
le disque de l'analyseur (5) présente N_{A} segments (2), avec N_{A} = N_{D}, et
en amont de l'analyseur (1) est disposé un convertisseur de rayons aux fins d'éclairer en forme d'anneau dans le sens de rayonnement la surface sensible de l'analyseur.

2. Micropolarimètre selon la revendication 1, **caractérisé en ce que** le disque de l'analyseur (5) est en une pièce et que le sens de polarisation est orienté radialement ou tangentiellement.

3. Micropolarimètre selon la revendication 1 ou 2, **caractérisé en ce que** chaque segment (2) est constitué d'une découpe (4) de forme triangulaire ou trapézoïdale en matière polarisante.

4. Micropolarimètre selon une des revendications 1 à 3, **caractérisé en ce que** le sens de polarisation de chaque segment (2) du disque de l'analyseur (5) forme avec le bissecteur d'angle respectif (6) un angle α, pour lequel on a 0° ≤ α ≤ 180°.

5. Micropolarimètre selon la revendication 4, **caractérisé en ce que** les segments respectivement opposés (2) présentent le même sens de polarisation.

6. Micropolarimètre selon une des revendications 1 à 5, **caractérisé en ce que** la matière polarisante contient des particules de taille nanométrique avec une forte anisotropie de la conductibilité optique.

7. Micropolarimètre selon une des revendications 1 à 6, **caractérisé en ce que** la matière polarisante est un film polarisant ou un verre à particules d'argent incluses.

8. Micropolarimètre selon une des revendications 1 à 7, **caractérisé en ce que** l'épaisseur de la matière polarisante est de l'ordre de 50 µm à 2 mm.

9. Micropolarimètre selon une des revendications 1 à 8, **caractérisé en ce que** l'analyseur (1) présente un nombre pair N_{A} de segments (2).

10. Micropolarimètre selon une des revendications 1 à 9, **caractérisé en ce que** les découpes (4) sont fixées sur les segments (11) du détecteur (10) au moyen d'une colle transparente (20) et que les découpes présentent la même forme que les segments (11) du détecteur (10).

11. Micropolarimètre selon une des revendications 1 à 10,
**caractérisé en ce que**
les segments (11) du détecteur (10) sont rectangulaires,
les segments (11) sont disposés les uns près des autres linéairement ou en lignes et en colonnes, et
qu'entre les N_{A} segments (2) de l'analyseur (1) et les N_{D} segments (11) du détecteur (10), des conducteurs de lumière (80) sont disposés.

12. Micropolarimètre selon la revendication 11, **caractérisé en ce que**, pour chaque segment (2, 11), un faisceau compressé de conducteurs lumineux (81) adapté à la forme du segment de l'analyseur (2) et du segment de détecteur (11) est disposé.

13. Micropolarimètre selon une des revendications 1 à 12, **caractérisé en ce qu'**en amont d'au moins deux segments d'analyseur (2) est disposée respectivement une plaquette en matière à double réfraction à décalage de phase connu δ, de préférence une plaquette λ/4 (100).

14. Micropolarimètre selon une des revendications 1 à 13, **caractérisé en ce que** le convertisseur de rayons comprend au moins une lentille convexe (40).

15. Micropolarimètre selon la revendication 14, **caractérisé en ce que** la lentille convexe (40) est une lentille convexe en plan dont la surface plane (42) est tournée vers l'analyseur (1).

16. Micropolarimètre selon une des revendications 14 ou 15, **caractérisé en ce que** la surface plane (42) se trouve dans le sens du rayonnement derrière le plan focal (44).

17. Micropolarimètre selon une des revendications 1 à 13, **caractérisé en ce que** le convertisseur de rayons comprend au moins une lentille concave (30).

18. Micropolarimètre selon la revendication 17, **caractérisé en ce que** la lentille concave (30) est une lentille concave en plan dont la surface plane (32) est tournée vers l'analyseur (1).

19. Micropolarimètre selon une des revendications 1 à 13, **caractérisé en ce que** le convertisseur de rayons comprend un cône transparent (50).

20. Micropolarimètre selon la revendication 19, **caractérisé en ce que** la surface du cône (51) est d'une dimension telle que la surface de base (52) du cône se trouve dans le sens de rayonnement derrière un plan (54) dans lequel les rayons lumineux se croisent.

21. Micropolarimètre selon une des revendications 1 à 13, **caractérisé en ce que** le convertisseur de rayons comprend un jeu de lentilles (60), une lentille Fresnel (70) ou une lentille à gradient d'indice (73).

22. Micropolarimètre selon une des revendications 1 à 21, **caractérisé en ce que** le diamètre du convertisseur de rayons est supérieur ou égal au diamètre de l'analyseur (1).

23. Micropolarimètre selon une des revendications 1 à 22, **caractérisé en ce que** les segments du détecteur (11) sont intégrés sur une puce de conditionnement de signaux ou dans la puce de conditionnement de signaux (90).

24. Micropolarimètre selon une des revendications 1 à 23, **caractérisé en ce que** le détecteur (10) est une puce CCD, dont les pixels sont branchés ensemble électroniquement pour former N_{D} segments.
